Europäisches Patentamt

European Patent Office

Office européen des brevets

(11) Numéro de publication: **0 210 902**
**A1**

# (12) DEMANDE DE BREVET EUROPEEN

(21) Numéro de dépôt: 86401490.7

(22) Date de dépôt: 04.07.86

(51) Int. Cl.⁴: **G05D 1/04 , G01C 5/00**

(30) Priorité: 26.07.85 FR 8511500

(43) Date de publication de la demande:
04.02.87 Bulletin 87/06

(84) Etats contractants désignés:
DE GB

(71) Demandeur: **THOMSON-CSF**
**173, Boulevard Haussmann**
**F-75379 Paris Cedex 08(FR)**

(72) Inventeur: **Murgue, Jean-Pierre**
**THOMSON-CSF SCPI 19, avenue de Messine**
**F-75008 Paris(FR)**
Inventeur: **Presslat, Robert**
**THOMSON-CSF SCPI 19, avenue de Messine**
**F-75008 Paris(FR)**
Inventeur: **Robin, Léon**
**THOMSON-CSF SCPI 19, avenue de Messine**
**F-75008 Paris(FR)**

(74) Mandataire: **El Manouni, Josiane et al**
**THOMSON-CSF SCPI 19, avenue de Messine**
**F-75008 Paris(FR)**

(54) **Procédé et dispositif d'aide à la tenue de hauteur dans la navigation aérienne.**

㉗ Ce procédé consiste, pour tout point (M) de l'image du paysage survolé par l'avion (A), repéré par son angle de site ($\theta$ -p) par rapport au vecteur vitesse $\vec{V}$ de l'avion, et situé dans une zone comprise entre une limite de site inférieure ($\theta_1$ -p) et une limite de site supérieure ($\theta_2$ -p), sur la trajectoire de l'avion, à détecter un éventuel écart entre la vitesse angulaire $\Omega$ de défilement de ce point par rapport à l'avion, fonction de la hauteur (h, H) de franchissement ultérieur de ce point par l'avion, à conditions de pilotage identiques, et une vitesse angulaire de défilement de consigne ($\Omega_0$) correspondant à une hauteur de consigne ($h_0$, $H_0$) de franchissement ultérieur par l'avion d'un point de même site ($\theta$ -p), à conditions de pilotage identiques, et à modifier le pilotage de l'avion, en cas d'écart entre ces vitesses angulaires de défilement, de façon à réduire ces écarts.

Application notamment à la navigation à très basse altitude.

FIG_1

## PROCEDE ET DISPOSITIF D'AIDE A LA TENUE DE HAUTEUR DANS LA NAVIGATION AERIENNE

La présente invention concerne un procédé et un dispositif d'aide à la tenue de hauteur dans la navigation aérienne.

Dans la navigation à très basse altitude des aéronefs, notamment des aéronefs militaires, la charge de travail des pilotes est importante. Les pilotes des avions de combat doivent ainsi, tout en volant aussi près que possible du sol (de façon à éviter le repérage par des moyens de veille et de tir), assurer des tâches de navigation sur des points repérés, d'acquisition d'objectifs, d'alerte, de contre-mesures, d'autodéfense, d'observation, etc....

La présente invention a pour but de permettre la tenue d'une hauteur prédéterminée sans aucune mesure directe active de la distance oblique ou verticale, et même si le relief n'est pas connu préalablement.

A cet effet, l'invention utilise l'image perspective du paysage extérieur devant l'avion, obtenue soit en vision directe, soit au moyen d'un capteur ou autrement (relief synthétique, par exemple).

La tenue de hauteur peut être réalisée suivant l'invention soit par le pilote, grâce à l'exploitation d'une figure adéquate superposée à cette image, soit par un pilotage automatique grâce à un dispositif de commande adéquat.

La présente invention a pour objet un procédé d'aide à la tenue de hauteur dans la navigation aérienne, essentiellement caractérisé en ce qu'il consiste, pour tout point de l'image du paysage survolé par l'avion, repéré par son angle de site ($\theta$ -p) par rapport au vecteur vitesse de l'avion, et situé dans une zone comprise entre une limite de site inférieure et une limite de site supérieure, sur la trajectoire de l'avion, à détecter un éventuel écart entre la vitesse angulaire de défilement de ce point par rapport à l'avion, fonction de la hauteur -(h, H) de franchissement ultérieur de ce point par l'avion, à conditions de pilotage identiques, et une vitesse angulaire de défilement de consigne, correspondant à une hauteur de consigne ($h_o$, $H_o$), de franchissement ultérieur par l'avion d'un point de même site ($\theta$ -p), à condition de pilotage identiques, et à modifier le pilotage de l'avion, en cas d'écart entre ces vitesses angulaires de défilement, de façon à réduire ces écarts.

D'autres objets et caractéristiques de la présente invention apparaîtront plus clairement à la lecture de la description suivante d'exemples de réalisation, faite en relation avec les dessins ci-annexés dans lesquels :

-La figure 1 est un schéma posant le principe de l'invention et définissant les paramètres utilisés dans le cas où la hauteur de franchissement par l'avion des différents points de la zone particulière considérée au sol est mesurée par référence à la direction du vecteur vitesse de l'avion ;

-Les figures 2a et 2b illustrent deux exemples de réalisation de la tenue de hauteur grâce à l'exploitation par le pilote d'une figure adéquate superposée à l'image ;

-Les figures 3a et 3b représentent des exemples d'image de la zone considérée au sol, obtenues respectivement à deux instants successifs t + $\Delta$t ;

-Les figures 4a et 4b illustrent par des exemples le choix des valeurs limite, inférieure et supérieure, du champ de sites délimitant la zone considérée au sol ;

-La figure 5 est un schéma posant le principe de l'invention et définissant les paramètres utilisés dans le cas où la hauteur de franchissement par l'avion des différents points de la zone particulière considérée au sol est mesurée par référence à une horizontale passant par le centre de gravité de l'avion ;

-La figure 6 représente comparativement différents exemples de trajectoire d'avion pour une configuration donnée de la zone particulière considérée au sol, suivant qu'est mis en oeuvre un contrôle du pilotage de l'avion par action sur la pente de son vecteur vitesse ou par action sur la hauteur de son centre de gravité par rapport au sol ;

-La figure 7 est un schéma d'un exemple de réalisation d'un dispositif de commande de pilotage lorsque la tenue de hauteur est réalisée par pilotage automatique ;

-La figure 8 représente la zone d'image traitée par corrélation dans le cas de la figure 7.

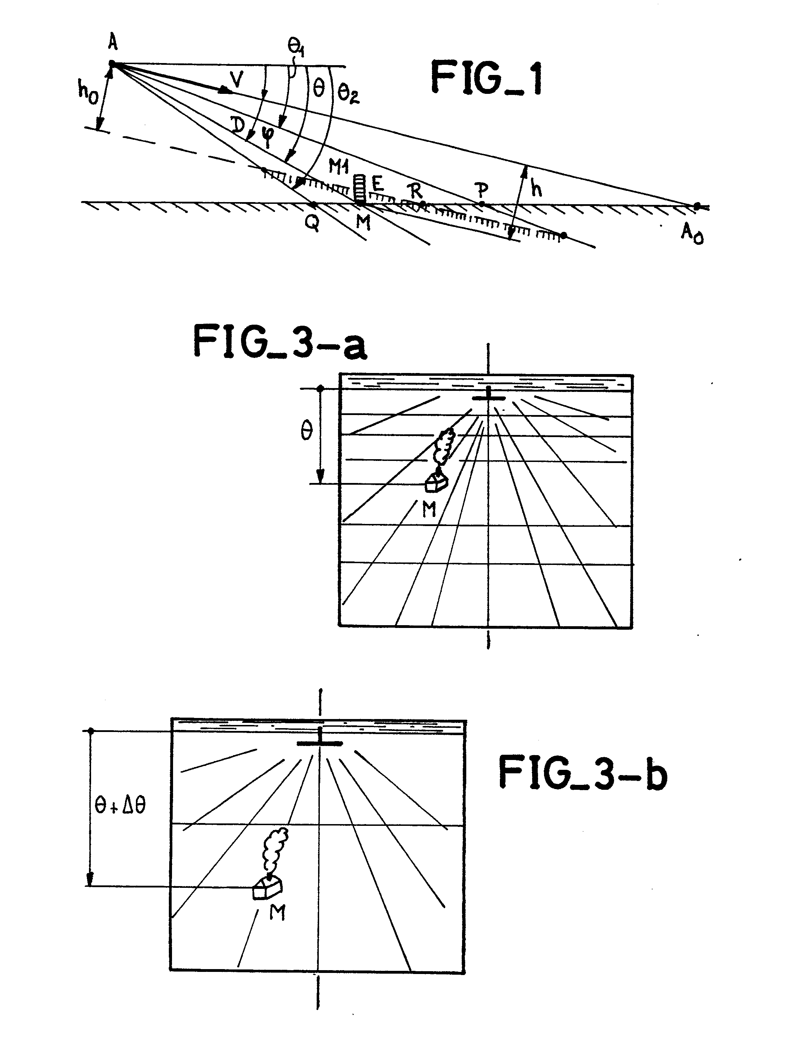

On considère la figure 1 où un avion est représenté par le point A et son vecteur vitesse absolue par le vecteur $\vec{V}$ . Le défilement apparent d'un point fixe M au sol s'exprime par la relation :

$$\Omega = \frac{V}{D} \sin (\theta - p) \text{ et, comme}$$

$$D = \frac{h}{\sin(\theta - p)}$$

la relation devient :

$$\Omega = \frac{V}{h}\sin^2(\theta - p) \quad (1)$$

ou encore $h = \dfrac{V}{\Omega}\sin^2(\theta - p) \quad (2)$

Si V, $\theta$, p sont connus, la mesure de $\Omega$ permet de déterminer la distance minimale h à laquelle l'avion passera au-dessus du point M du relief (si $\vec{V}$ reste inchangé).

D'autre part, si $h_o$ est la valeur désirée de h - (valeur de consigne) et $\Omega_o$ (pour un angle $\theta$ -p donné) la valeur angulaire associée, on a : (pour h et $h_o \neq o$)

$$\frac{\Delta h = h - h_o}{h_o} = \frac{-\Delta \Omega = \Omega_o - \Omega}{\Omega} \quad (3)$$

L'invention s'appuie sur ces relations.

Deux modalités d'application sont envisagées :

-L'aide au suivi de terrain piloté,

-Le suivi automatique de terrain.

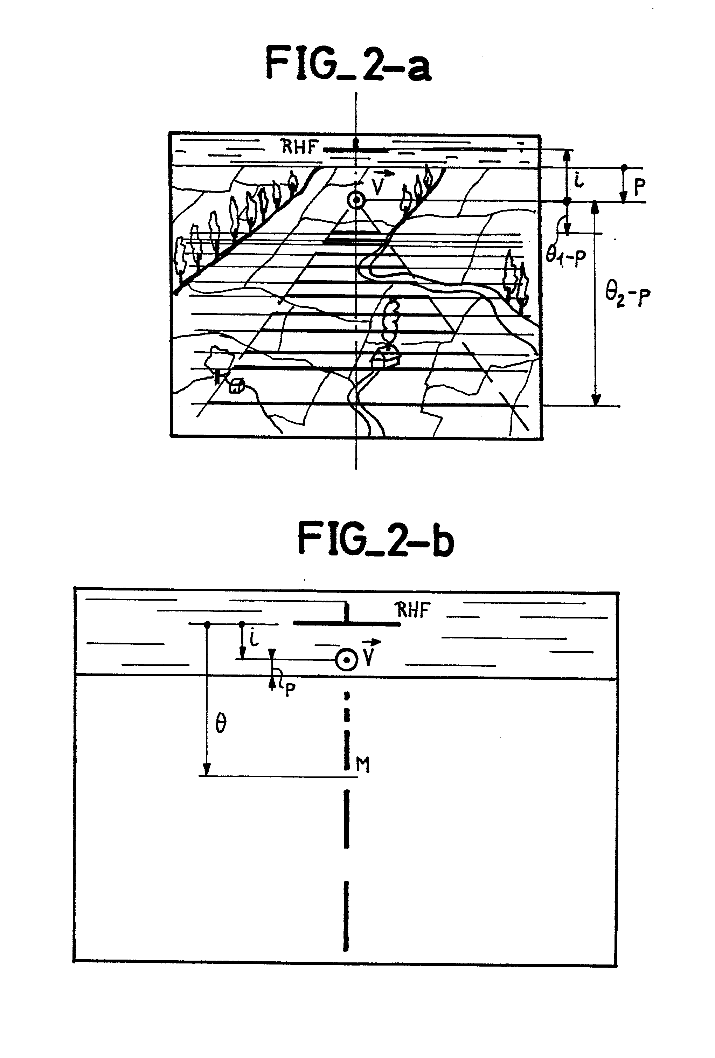

Dans le cas de l'aide au suivi de terrain piloté, sont présentés au pilote, comme le montre la figure 2a, d'une part l'image du sol, d'autre part, une échelle défilante animée des vitesses de défilement définies par la relation :

$$\Omega_o = \frac{V}{h}_o \sin^2(\theta - p) \quad (4)$$

Cette échelle est présentée pour des sites par rapport au vecteur vitesse $\vec{V}$ compris entre $\theta_2$ -p et $\theta_1$ -p (les angles $\theta_1$ et $\theta_2$ étant choisis suivant des considérations qui seront exposées plus loin).

Par comparaison, pour chaque angle $\theta$ -p dans le champ défini ci-dessus, entre les vitesses de défilement $\Omega$ des points du paysage et les vitesses de défilement $\Omega_o$ de l'échelle de référence, le pilote peut savoir (Cf relation (3)) s'il passera trop près ou trop loin de chacun de ces points.

Par exemple, si on regarde à nouveau la figure 1, on observe que les points du sol de R à P (R excepté) défilent plus vite que la référence (l'avion passera trop près d'eux) et inversement pour les points R à Q (R excepté). Le point R a le défilement normal. Quant à une tour du type $MM_1$, on peut voir qu'elle défile plus lentement que la référence vers son pied M, plus vite vers son sommet $M_1$.

L'échelle défilante de référence peut, pour augmenter le réalisme, être représentée comme vue en perspective, c'est-à-dire que les intervalles entre les barreaux et éventuellement les longueurs des barreaux, seront proportionnels à sin ($\theta$ -p). On peut aussi, par exemple, comme le montre la figure 2b, imaginer une présentation "en cascade" de tirets verticaux, la longueur de chacun et leurs intervalles variant comme leur vitesse verticale proportionnellement à :

$$\frac{V}{H}\sin^2(\theta - p)$$

Sur les figures 2a et 2b, l'angle i désigne l'angle d'incidence de l'avion, c'est-à-dire l'angle entre l'axe longitudinal de l'avion, ou référence horizontale fuselage (en abrégé RHF) de l'avion et la direction du vecteur vitesse.

Dans le cas du suivi automatique de terrain, par corrélation de portions homologues des images successivement obtenues dans le temps, la vitesse de défilement $\Omega$ est obtenue pour chacun des points de l'image, par le rapport $\frac{\Delta\theta}{\Delta t}$ où $\Delta\theta$ représente le décalage en site de chaque point du paysage entre les instants t et t + $\Delta t$.

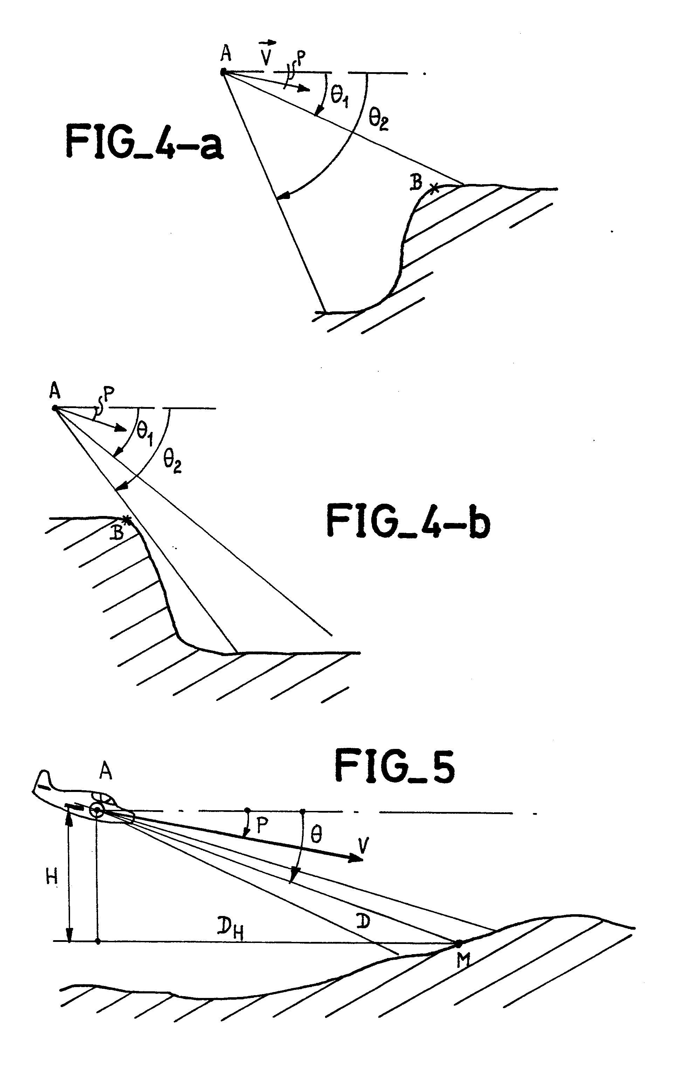

La valeur $\Delta\theta$ est mise en évidence sur les figures 3a et 3b représentant respectivement la position d'un même élément du paysage sur les images obtenues à deux instants sucessifs t et t + $\Delta t$.

On obtient ainsi pour chacun des points de l'image :

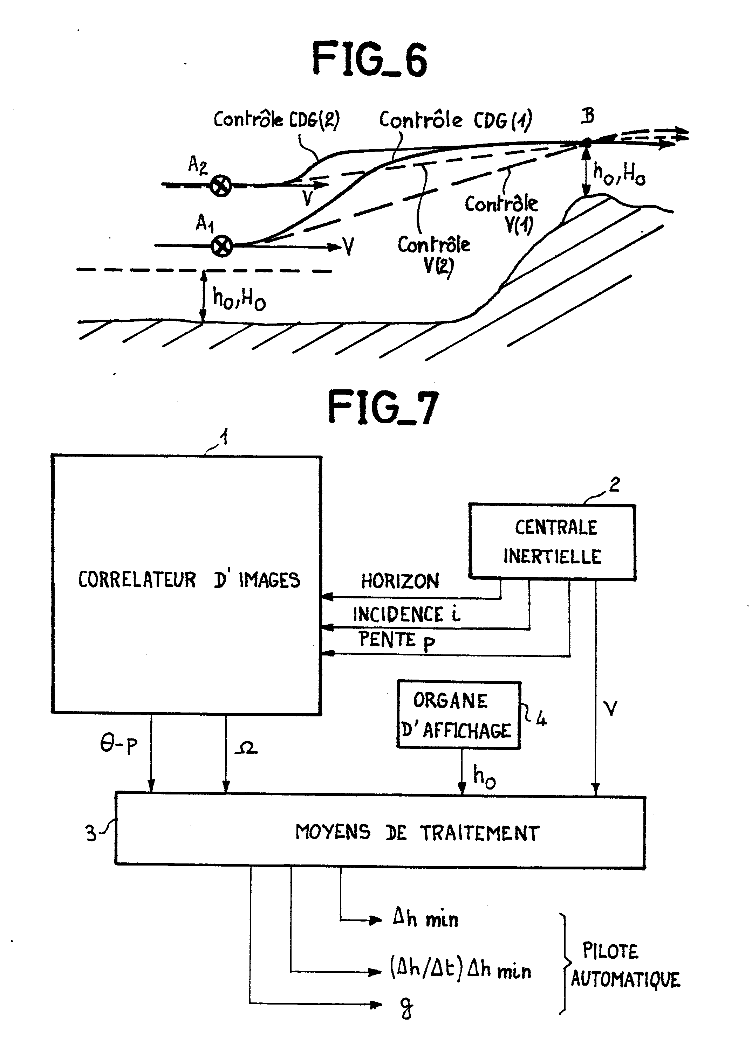

$$\Delta h = h - h_o = \frac{V}{\Omega}\sin^2(\theta - p) - h_o \quad (5)$$ Ce calcul est effectué par un dispositif tel que celui décrit ultérieurement en relation avec la figure 7.

La valeur $\Delta h$ est utilisable directement en entrée du pilote automatique pour le pilotage "en vertical" de l'avion (associé aux informations habituelles de la centrale de l'avion).

Plus précisément, il faudra que la plus petite des valeurs $\Delta h$ obtenues pour l'ensemble des points situés sur la route de l'avion et de sites compris entre $\theta_1$ et $\theta_2$, appelée $\Delta h_{min}$, soit égale à 0. C'est donc la valeur $\Delta h_{min}$ qui pilotera les évolutions demandées.

On explique maintenant à l'aide des figures 4a et 4b, les raisons qui président au choix des limites supérieure et inférieure du champ de site : $\theta_1$ et $\theta_2$.

Sur la figure 4a, on a représenté un avion A abordant une colline. Dans ce cas si la limite supérieure $\theta_1$ est relativement faible (comme c'est le cas sur cette figure) le sommet B de la colline va être pris en compte relativement tôt dans la détermination de la trajectoire future de l'avion, ce qui conduit à passer au-dessus de la vallée avec une hauteur supérieure à la valeur de consigne $h_0$. On a donc intérêt à choisir dans un tel cas une valeur $\theta_1$ plus élevée.

$$et\ D\ total = 2V\left[\tau + \sqrt{\frac{\Delta h_0}{(N-1)g}}\right]$$

où $\tau$ est le temps de réaction pour faire varier le facteur de charge, d'où :

$$tg\ (\Theta - p)_1 = \frac{h_0}{D\ total}$$

Par exemple, avec $h = 100m$, $\tau = 1s$, $V = 300$ m/s, $N = 0,5$, $D = 3\ 300$ m et $(\theta - p)_1 = 1°,7 -$ (30 mrad).

Inversement sur la figure 4b, on a représenté un avion A s'éloignant d'une colline. Dans ce cas, si la limite inférieure $\theta_2$ est relativement faible, ce qui est le cas sur cette figure, le sommet B de la colline ne va plus être pris en compte dans la détermination de la trajectoire future de l'avion, ce qui peut conduire à ne pas respecter la hauteur de consigne $h_0$ au passage au-dessus du point B. On a donc intérêt à choisir dans un tel cas une valeur $\theta_2$ plus élevée. La limite inférieure $(\theta - p)_2$ est donc choisie :

1°) de façon à éviter un rendu de main prématuré, par exemple, en abordant les crêtes, et,

2°) de façon à aller jusqu'à des sites où la sensibilité de perception des écarts de vitesse de défilement soit suffisante.

Plus généralement, la limite supérieure $(\theta - p)_1$ est choisie de façon à permettre d'effectuer la ressource nécessaire pour franchir un obstacle avec la hauteur de garde $h_0$, et avec un facteur de charge d'évolution verticale N normal en vol en basse altitude (par exemple de ± 0,5) et en franchissant l'obstacle en pente réannulée, ce qui donne :

$$\tfrac{1}{2} h_0 = \tfrac{1}{2}(N-1)g\left(\frac{D}{2V}\right)^2$$

Selon le même critère, par exemple, en contre-ressource à facteur de charge d'évolution 0,5 et temps de réaction nul, la hauteur de garde $h_0$ au-dessus de l'obstacle étant réduite de $\frac{h}{10}$, on trouve : $D = 600m$ et $(\theta - p)_2 = 9°,5$ (166 mrad).

Cette limite $(\theta - p)_2$ peut également être fixée par le champ dont on dispose en site dans la visualisation à travers laquelle ou dans laquelle est observé le terrain à survoler.

Dans le cas de la figure 5, au lieu de considérer la distance h de passage du vecteur $\vec{V}$ au-dessus des points du passage ( $\vec{V}$ étant de direction invariante), on considère la hauteur H de l'avion par rapport à ces éléments de paysage.

On cherchera alors à piloter $H - H_0$ (où $H_0$ est la hauteur désirée ou de référence) au lieu de piloter $h - h_0$, c'est-à-dire qu'au lieu de piloter la direction du vecteur vitesse, on pilotera la hauteur du centre de gravité de l'avion.

Dans ce cas, on aura :

$$\Omega = \frac{V}{D} \sin(\theta - p) \text{ et, comme } D = \frac{H}{\sin\theta}$$

$$\Omega = \frac{V}{D} \sin\theta \sin(\theta - p) \quad (6)$$

$$\text{et } H = \frac{V}{\Omega} \sin\theta \sin(\theta - p) \quad (7)$$

De même que précédemment, en définissant une hauteur $H_o$ de référence et les vitesses angulaires $\Omega_o$ associées, on aboutit à la relation :

$$\frac{\Delta H = H - H_o}{H_o} = \frac{\Delta \; \Omega = \Omega_o - \Omega}{\Omega} \quad (8)$$

Les considérations précédentes s'appliquent alors de la même façon à cette variante, à la différence près que $\sin\theta \sin(\theta - p)$ intervient au lieu de $\sin^2(\theta - p)$ dans le calcul des valeurs $\Omega$, $H$, $\Omega_o$, $H_o$.

L'avantage de cette variante réside dans le fait que la trajectoire imposée est pratiquement indépendante de l'écart, à instant donné, avec la trajectoire désirée. Par exemple, sur la figure 6, les trajectoires des avions $A_1$ et $A_2$ se rejoignent rapidement en contrôle de centre de gravité alors qu'en contrôle de vecteur vitesse, elles restent distinctes.

De plus le sommet B est franchi horizontalement, alors qu'en contrôle de vecteur vitesse il est franchi avec une pente, donc avec dépassement.

L'inconvénient de cette variante est de demander un pilotage plus contraignant avec des écarts de facteur de charge plus élevés.

Un autre avantage de cette variante est de permettre un asservissement stable facilement par injection d'une dose convenable et constante de la dérivée $\frac{dH}{dT}$ de l'écart $H-H_o$ (en effet $\frac{dH}{dt} = Vp$).

pour tous les points de la zone explorée.

L'objet de l'invention ne portant pas en lui-même sur le corrélateur, et cet élément étant bien connu en soi, notamment par le brevet français N° 1 504 656, on ne le décrira pas de façon plus détaillée.

Par contre, dans le cas de la solution à contrôle du vecteur vitesse, l'asservissement pour le pilotage automatique en fonction de l'écart h-ho demande une compensation variable plus délicate.

Sur la figure 7, est représenté un dispositif utilisable dans le cas de suivi automatique de terrain.

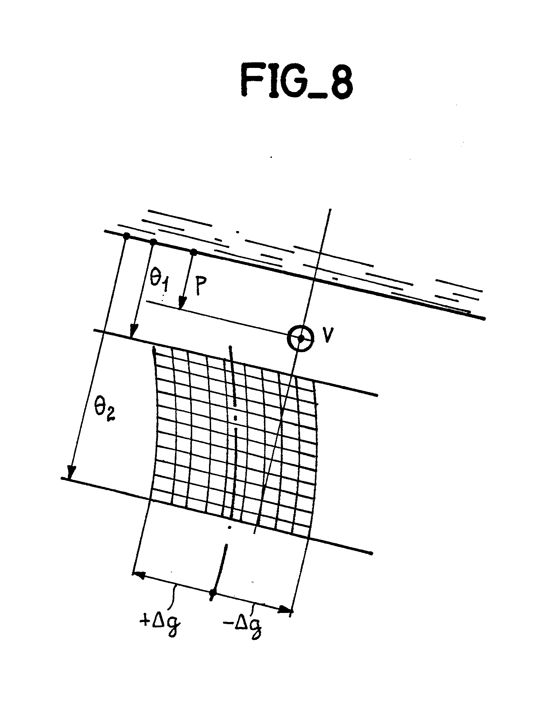

Ce dispositif comporte un corrélateur d'images 1 pour mesurer la vitesse angulaire de défilement en chacun des points de la zone considérée de l'image. Cette zone est définie par les valeurs $\theta_1$, $\theta_2$ et par les valeurs $\pm \Delta g$ en gisement autour de la trajectoire de l'avion (représentée en pointillés sur la figure 8) qui est prédite d'après l'angle de gite de l'avion et le facteur de charge. La corrélation s'effectue par petits éléments limités de cette zone, comme l'indique la figure 8, et permet d'obtenir le décalage en site $\Delta(\theta - p)$, ou décalage selon la verticale de l'image, de tout point de la zone explorée entre deux instants successifs $t$ et $t + \Delta t$, d'où l'on déduit la vitesse angulaire de défilement

$$\Omega = \frac{\Delta(\theta - p)}{\Delta t}$$

Ce corrélateur reçoit de la centrale inertielle 2 de l'avion les informations nécessaires au repérage des différents points de cette image, à savoir la position de l'horizon, la valeur de l'angle d'incidence i de l'avion, la valeur de la pente p, et la valeur de l'angle de gite de l'avion (donnant la verticale de l'image).

Le dispositif représenté sur la figure 7 comporte également des moyens de traitement 3 pour calculer en tout point l'écart par rapport à la hauteur de consigne :

$$\Delta h = \frac{V}{\Omega} \sin^2(\theta - P) - h_o$$ à partir des valeurs $\theta - P$ et $\Omega$ fournies par le corrélateur, V fournie par la centrale inertielle 2 de l'avion et $h_o$ fournie par exemple par un organe d'affichage 4.

Les moyens de traitement 3 comportent pour cela des circuits élémentaires réalisant les fonctions élémentaires X, : , -, sin ,etc.... et agencés de manière à réaliser la fonction souhaitée. Les moyens de traitement 3 permettent également de détecter, selon des procédés de traitement connus, la valeur $\Delta h_{min}$ parmi l'ensemble des valeurs $\Delta h$ obtenues pour les différents points de la zone explorée.

Le point correspondant à $\Delta h_{min}$ pourra être renforcé sur la visualisation. Les valeurs $\Delta h_{min}$ et g sont fournies au pilote automatique. La dérivée $\frac{d}{dt}$ ($\Delta h$) est également fournie pour permettre une stabilisation de boucle ; elle est par exemple obtenue par le calcul de :

$$\frac{\Delta h (t + 2 \Delta t) - \Delta h (t + \Delta t)}{\Delta t}$$

Le dispositif ainsi décrit correspond au cas où la hauteur de franchissement h des différents points du sol est mesurée par référence à la direction du vecteur vitesse.

La description correspondant au cas où la hauteur de franchissement H des différents points du sol est mesurée par référence à une horizontale passant par le centre de gravité de l'avion se déduit de la précédente en changeant $\sin^2(\theta - p)$ par $\sin \theta \sin (\theta - p)$ et $(h, h_o)$ par $(H, H_o)$.

## Revendications

1. Procédé d'aide à la tenue de hauteur dans la navigation aérienne, caractérisé en ce qu'il consiste, pour tout point (M) de l'image du paysage survolé par l'avion (A), repéré par son angle de site ($\theta - p$) par rapport au vecteur vitesse $\vec{V}$ de l'avion, et situé dans une zone comprise entre une limite de site inférieure ($\theta_1 - p$) et une limite de site supérieure ($\theta_2 - p$), sur la trajectoire de l'avion, à détecter un éventuel écart entre la vitesse angulaire $\Omega$ de défilement de ce point par rapport à l'avion, fonction de la hauteur (h,H) de franchissement ultérieur de ce point par l'avion, à conditions de pilotage identiques, et une vitesse angulaire de défilement de consigne ($\Omega_o$), correspondant à une hauteur de consigne (ho,Ho) de franchissement ultérieur par l'avion d'un point de même site ($\theta - p$), à conditions de pilotage identiques, et à modifier le pilotage de l'avion, en cas d'écart entre ces vitesses angulaires de défilement, de façon à réduire ces écarts.

2. Procédé selon la revendication 1, caractérisé en ce que la hauteur (h) de franchissement ultérieur d'un point par l'avion est mesurée par référence à la direction du vecteur vitesse ($\vec{V}$) de l'avion, le pilotage de l'avion étant alors modifié par action sur la pente (ou site) de son vecteur vitesse.

3. Procédé selon la revendication 1, caractérisé en ce que la hauteur (H) de franchissement ultérieur d'un point par l'avion est mesurée par référence à une horizontale passant par le centre de gravité de l'avion, le pilotage de l'avion étant alors modifié par action sur la hauteur du centre de gravité de l'avion par rapport au sol.

4. Procédé selon la revendication 1, caractérisé en ce que cette détection est effectuée par superposition à l'image d'une échelle défilante correspondant à la hauteur de consigne, dont chaque barreau, correspondant à une valeur de site comprise entre la limite inférieure et la limite supérieure considérées, est animé de la vitesse angulaire de défilement de référence correspondant à ce site.

5. Procédé selon la revendication 1, caractérisé en ce que cette détection consiste, pour tout point (M) de la zone considérée défini par son angle de site ($\theta - p$) par rapport au vecteur vitesse de l'avion, à :

-mesurer à partir de l'image la vitesse angulaire -($\Omega$) de défilement de ce point par rapport à l'avion,

-calculer la vitesse angulaire de défilement de consigne ($\Omega_o$) de ce même point, à partir de la hauteur de consigne ($h_o, H_o$), -comparer ces deux valeurs, en vue de détecter un éventuel écart.

6. Procédé selon la revendication 5, caractérisé en ce qu'après la mesure de la vitesse angulaire ($\Omega$) de défilement d'un point par rapport à l'avion est calculée à partir de cette valeur ($\Omega$) la hauteur (h,H) de franchissement ultérieur de ce point par l'avion, à conditions de pilotage identiques, et en ce que la détection consiste alors à comparer directement la hauteur (h, H) obtenue en tout point à la hauteur de consigne $(h_o, H_o)$.

7. Procédé selon les revendications 2 et 5, ou 2 et 6, caractérisé en ce que les valeurs $\Omega$ ou $\Omega_o$ sont obtenues à partir des valeurs ho ou Ho, ou inversement en appliquant la relation :

$$\Omega = \frac{V}{h} \sin^2 (\theta - p)$$

ou inversement :

$$h = \frac{V}{\Omega} \sin^2(\theta - p)$$

8. Procédé selon les revendications 3 et 5, ou 3 et 6, caractérisé en ce que les valeurs $\Omega$ ou $\Omega_o$ sont obtenues à partir des valeurs H ou $H_o$, ou inversement, en appliquant la relation :

$$\Omega = \frac{V}{H} \sin \theta \sin (\theta - p)$$

ou inversement :

$$H = \frac{V}{\Omega} \sin \theta \sin (\theta - p)$$

9. Procédé selon l'une des revendications 1 à 8, caractérisé en ce que le pilotage de l'avion est modifié de façon à ramener à zéro le plus faible des écarts $(h-h_o, H-H_o$ ou $\Omega - \Omega_o)$ détectés sur la zone considérée.

10. Dispositif pour la mise en oeuvre du procédé selon l'une des revendications 1 à 9, caractérisé en ce qu'il comporte :

-des moyens pour mesurer, à partir de l'image et pour tout point (M) de la zone d'image considérée, défini par son angle de site $\theta - p$ par rapport au vecteur vitesse de l'avion, la vitesse angulaire ( $\Omega$ ) de défilement de ce point par rapport à l'avion,

-des moyens pour calculer pour chacun de ces points, à partir de la hauteur de consigne, la vitesse angulaire de défilement de consigne $\Omega_o$,

-des moyens pour comparer en tout point les vitesses angulaires $\Omega$ et $\Omega_o$ ainsi obtenues.

11. Dispositif pour la mise en oeuvre du procédé selon la revendication 6, caractérisé en ce qu'il comporte :

-des moyens pour mesurer, à partir de l'image et pour tout point de la zone d'image considérée, défini par son angle de site $\theta - p$ par rapport au vecteur vitesse de l'avion, la vitesse angulaire de défilement de ce point par rapport à l'avion.,

-des moyens pour calculer, pour chacun de ces points, la hauteur (h, H) de franchissement ultérieur de ce point par l'avion, à conditions de pilotage identiques,

-des moyens pour comparer en tout point cette hauteur (h, H) à la hauteur de consigne $(h_o, H_o)$.

12. Dispositif selon l'une des revendications 10 et 11, caractérisé en ce que les moyens pour mesurer la vitesse angulaire de défilement de chacun des points consistent en un corrélateur d'images.

# FIG_1

# FIG_3-a

# FIG_3-b

# FIG_2-a

RHF

$\vec{V}$

$i$

$P$

$\theta_1 - P$

$\theta_2 - P$

# FIG_2-b

RHF

$i$

$\vec{V}$

$P$

$\theta$

$M$

FIG_4-a

FIG_4-b

FIG_5

# FIG_6

Contrôle CDG(2)  Contrôle CDG(1)   B

A₂ ⊗ → V

Contrôle V(1)

Contrôle V(2)

A₁ ⊗ → V

$h_o, H_o$

$h_o, H_o$

# FIG_7

CORRELATEUR D'IMAGES (1)

CENTRALE INERTIELLE (2)

HORIZON

INCIDENCE $i$

PENTE $p$

ORGANE D'AFFICHAGE (4)

$\theta - P$     $\Omega$     $h_o$     V

MOYENS DE TRAITEMENT (3)

→ $\Delta h$ min

→ $(\Delta h / \Delta t) \Delta h$ min   } PILOTE AUTOMATIQUE

→ $\gamma$

# FIG_8

# RAPPORT DE RECHERCHE EUROPEENNE

Office européen des brévets

Numero de la demande

EP 86 40 1490

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 4) |
|---|---|---|---|
| A | US-A-3 076 095 (O. BECKLUND) <br><br> * Colonne 3, lignes 53-74; colonne 10, lignes 53-69; colonne 11, ligne 67 - colonne 12, ligne 12; figures 1,8 * <br><br> --- | 1,2,7, 10 | G 05 D 1/04 <br> G 01 C 5/00 |
| A | FR-A-1 168 037 (J. TURCK) <br> * Page 1, colonne de droite, ligne 21 - page 2, colonne de gauche, ligne 12; figures 1,2 * <br><br> ----- | 1 | |

| DOMAINES TECHNIQUES RECHERCHES (Int. Cl. 4) |
|---|
| G 01 C <br> G 01 P <br> G 01 S <br> G 05 D |

Le présent rapport de recherche a été établi pour toutes les revendications

| Lieu de la recherche <br> LA HAYE | Date d'achèvement de la recherche <br> 10-10-1986 | Examinateur <br> HELOT H.V. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82